# EUROPÄISCHE PATENTANMELDUNG

(11) **EP 1 868 182 A1**
(43) Veröffentlichungstag der Anmeldung: **19.12.2007**
(21) Anmeldenummer: 06115460.5
(22) Anmeldetag: 14.06.2006
(51) Int. Cl.: G10K 11/00

(54) **Ultraschallgeber mit Kühlflüssigkeit, Ultraschall-Schweissanordnung und Verfahren zum Betreiben eines Ultraschallgebers**

(71) Anmelder: Telsonic Holding AG, 9552 Bronschhofen (CH)
(72) Erfinder: Solenthaler, Peter, 9543, St. Margarethen (CH)
(74) Vertreter: Hepp, Dieter

(57) **Zusammenfassung**

Die Erfindung betrifft einen Ultraschallgeber (1), insbesondere zum Ultraschallschweissen, mit mindestens einem elektromechanischen Wandler (3), wobei der mindestens eine elektromechanische Wandler (3) von Kühlflüssigkeit (8) umgeben ist, eine Ultraschall-Schweissanordnung (100; 200; 300; 400) mit mindestens einem derartigen Ultraschallgeber (1) und ein Verfahren zum Betreiben eines Ultraschallgebers (1). Die Erfindung zeichnet sich dadurch aus, dass durch eine Bewegung des Ultraschallgebers (1) eine für die Kühlung ausreichende Strömung und/oder Verwirbelung der Kühlflüssigkeit (8) und ein Wärmeabgabe an das Gehäuse (2) des Ultraschallgebers (1) erfolgt.

## Beschreibung

Die Erfindung betrifft einen Ultraschallgeber, insbesondere zum Ultraschallschweissen, mit mindestens einem elektro-mechanischen Wandler, insbesondere einem Piezopaket, wobei der mindestens eine elektro-mechanische Wandler von Kühlflüssigkeit umgeben ist, eine Ultraschall-Schweissanordnung mit mindestens einem derartigen Ultraschallgeber und ein Verfahren zum Betreiben eines Ultraschallgebers.

Ein Ultraschallgeber, insbesondere zum Ultraschallschweissen, besteht typischerweise aus einem oder mehreren elektrisch ansteuerbaren elektro-mechanischen Wandlern, insbesondere Piezopaketen, in welchen Piezoelemente angeordnet sind. Diese setzen elektrische Energie in mechanische Schwingungen um. Die elektro-mechanischen Wandler sind an einen Konverterkörper gekoppelt, welcher die Ultraschallenergie über eine Sonotrode an das Schweissgut abgibt.

Bei dem Betrieb von Ultraschallgebern treten Verlustleistungen in Form von Wärme auf. Die Ursache hierfür sind einerseits elektrische Verluste und darüber hinaus Reibungsverluste in den elektro-mechanischen Wandlern, welche bei der Umwandlung von elektrischer in mechanische Energie entstehen.

Aus der Patentschrift DE 102 54 894 und den darin zitierten Druckschriften sind Funktionsweisen von Kühlsystemen für Ultraschallwandler bekannt, darunter Kühlsysteme, die eine Wärmeabführung durch Wärmeleitung oder Konvektion ermöglichen. Als Wärmeleiter sind zum Beispiel Harze oder gasförmige Medien aufgeführt. DE 102 54 894 beansprucht ein Kühlsystem, bei dem eine Kühlflüssigkeit unter Druck durch einen Kanal in einem Wandlerkörper eines Ultraschallwandlers strömt.

Die bekannten Kühlsysteme erlauben entweder nur eine begrenzte Wärmeabfuhr oder sie sind im Hinblick auf die Gerätetechnik, den Platzbedarf und die Montage aufwendig, wenn beispielsweise mit einer Pumpe für eine Zirkulation der Kühlflüssigkeit gesorgt werden muss.

Der Erfindung liegt die Aufgabe zugrunde, einen Ultraschallgeber und eine Ultraschall-Schweissanordnung zu schaffen, welche die Nachteile aus dem Stand der Technik überwinden, die einen effektiven und kostengünstigen Wärmeausgleich ermöglichen und somit den Betrieb zuverlässig und wirtschaftlich gewährleisten.

Die Aufgabe wird durch einen Ultraschallgeber mit den in Anspruch 1 genannten Merkmalen gelöst.

Der Ultraschallgeber weist mindestens einen elektro-mechanischen Wandler auf, wobei der oder die elektro-mechanischen Wandler zumindest teilweise von Kühlflüssigkeit umgeben ist bzw. sind. Die Kühlflüssigkeit befindet sich in einem Gehäuse, welches den mindestens einen elektro-mechanischen Wandler zumindest teilweise umgibt und über dessen Aussenwand Wärme von der Kühlflüssigkeit an die Umgebung ableitbar ist. Der mindestens eine elektro-mechanische Wandler ist in dem Gehäuse so angeordnet, dass die Kühlflüssigkeit zwischen dem mindestens einen elektro-mechanischen Wandler und dem Gehäuse strömen kann und die Kühlflüssigkeitsströmung ist so ausgelegt, dass durch Bewegung des Ultraschallgebers eine für die Kühlung ausreichende Strömung und/oder Verwirbelung der Kühlflüssigkeit und eine Wärmeabgabe an das Gehäuse erfolgt.

Die Kühlflüssigkeitsströmung ist abhängig von den räumlichen Gegebenheiten, den verwendeten Materialien, der Wärmezufuhr und/oder der Bewegung. Die Auslegung der Kühlflüssigkeitsströmung kann vorgenommen werden, indem die genannten Grössen aufeinander abgestimmt werden.

Zu den räumlichen Gegebenheiten zählen das Volumen, das die Kühlflüssigkeit einnimmt, die Abmessung des Gehäuses, der elektro-mechanischen Wandler und des Konverterkörpers, die Lage und die Grösse der Kontaktflächen zwischen der Kühlflüssigkeit und den elektro-mechanischen Wandlern sowie dem Gehäuse. Einen Einfluss auf die Strömung der Kühlflüssigkeit haben auch die Eigenschaften der verwendeten Materialien, wie Wärmekapazität und Wärmeleitfähigkeit der Kühlflüssigkeit, des Konverterkörpers und des Gehäuses, sowie die Viskosität der Flüssigkeit. Die Wärmezufuhr ist abhängig von der Leistung, mit welcher die elektro-mechanischen Wandler betrieben werden. Die Kühlflüssigkeitsströmung wird ausserdem durch die Bewegung beeinflusst.

Bei der Bewegung des Ultraschallgebers entsteht eine Strömung und/oder Verwirbelung der Kühlflüssigkeit, die Kühlflüssigkeit gerät also in Bewegung relativ zu dem Gehäuse und den elektro-mechanischen Wandlern und wird dabei gemischt.

Durch die Abwärme an den elektro-mechanischen Wandlern beim Betrieb des Ultraschallgebers erwärmt sich die Kühlflüssigkeit in der Umgebung der elektro-mechanischen Wandler und die Temperatur in der Kühlflüssigkeit wird inhomogen. Aufgrund von Konvektion und Wärmeleitung erfolgt ein Temperaturausgleich, der allerdings relativ langsam abläuft. Bei der Bewegung des Ultraschallgebers werden Inhomogenitäten in der Temperaturverteilung der Kühlflüssigkeit durch eine Strömung und/oder Verwirbelung der Kühlflüssigkeit ausgeglichen, Wärme kann auf die gesamte Kühlflüssigkeit verteilt und auf die Aussenwand des Gehäuses übertragen werden. Somit erfolgt ein Wärmetransport von den elektro-mechanischen Wandlern auf das Gehäuse und von dort an die Umgebung.

Um die Bewegung zu ermöglichen, ist der Ultraschallgeber mit einer Vorrichtung verbindbar, die den Ultraschallgeber in eine kontrollierte Bewegung versetzen kann. Eine schnelle Strömung und/oder Verwirbelung in einem Grossteil der Flüssigkeit kann erzielt werden, wenn der Ultraschallgeber in eine rotatorische Bewegung versetzt wird, beispielsweise um eine eigene Achse gedreht wird.

Ähnlich wie bei einer umgepumten Kühlflüssigkeit wird in der vorliegenden Erfindung eine wärmeaustauschende Konvektion erzwungen, jedoch ohne äusseren Flüssigkeitskreislauf. Da die Wärme an das Gehäuse abgegeben wird, ist es nicht nötig, grosse Mengen an Kühlmittel für einen Wärmeausgleich zur Verfügung zustellen.

Bevorzugt ist die Verwirbelung und/oder Strömung auf das Gehäuse beschränkt. Die Kühlflüssigkeit wird dazu in dem Gehäuse gehalten. Ist die Kühlflüssigkeit beispielsweise einmal in das Gehäuse geleitet worden, wird das Gehäuse hermetisch verschlossen, so dass die Kühlflüssigkeit aus diesem nicht herausdringen kann. Bevorzugt ist das Innere des Gehäuses soweit mit der Kühlflüssigkeit gefüllt, dass im geschlossenen Zustand keine Gasblase vorhanden ist. Damit wird sichergestellt, dass die im Gehäuse befindliche freie Oberfläche des elektro-mechanischen Wandlers stets von Kühlflüssigkeit umgeben ist.

Bevorzugt besteht die Kühlflüssigkeit aus einem Material, das elektrisch isolierend ist. Die Kühlflüssigkeit kann dann, ohne elektrische Störungen zu verursachen, in direktem Kontakt zu den elektro-mechanischen Wandlern stehen, was die Aufnahme der Abwärme erleichtert.

Da die Kühlflüssigkeit in dem Gehäuse starken Druckschwankungen ausgesetzt ist, erweist es sich von Vorteil, wenn die Kühlflüssigkeit wenig oder gar nicht kavitierend ist. Bei niedrigem Druck können sich in Flüssigkeiten Blasen entwickeln, die bei Druckerhöhung implodieren. Dieser Effekt, Kavitation genannt, kann zu Schäden an dem Konverterkörper, dem Gehäuse, vor allem aber an den elektro-mechanischen Wandlern führen.

Das Entstehen der Kavitationsblasen hängt von der Dampf-DruckKurve der Flüssigkeit und den entstehenden Drücken ab. Erfindungsgemäss wird eine Kühlflüssigkeit gewählt, deren Dampf-Druckkurve so verläuft, dass bei den in dem Gehäuse auftretenden Drücken keine oder kaum Kavitationsblasen entstehen, die Flüssigkeit also gar nicht oder nur wenig kavitierend ist. Geeignete Flüssigkeiten sind zum Beispiel Öle oder Paraffine.

Die Neigung der Kühlflüssigkeit zur Kavitationsbildung kann herabgesetzt werden, wenn die Kühlflüssigkeit unter einem Druck steht, der grösser als der Umgebungsdruck des Gehäuses ist, insbesondere, wenn es sich bei der Kühlflüssigkeit um eine Flüssigkeit handelt, die bei Umgebungsdruck kavitierend ist.

Damit die Kühlflüssigkeit verlässlich an dem mindestens einen elektro-mechanischen Wandler und gegebenenfalls druckfest im Inneren des Gehäuses gehalten werden kann, darf das Gehäuse keine Undichtigkeiten aufweisen. Es muss daher sicher gestellt sein, dass das Gehäuse diesen Anforderungen auch in Bereichen genügt, wo elektrische Zuleitungen durch die Gehäusewand geführt werden. In einer vorteilhaften Ausführungsform sind die elektrischen Zuleitungen in einer Glasperle vergossen und die Glasperle steht in dem Bereich, wo die elektrischen Zuleitungen in das Gehäuse treten, mit der Gehäusewand in dichtendem Kontakt. Bevorzugt werden der Durchtrittsbereich und die Zuleitungen gleichzeitig in der Glasperle vergossen.

Die der Erfindung zugrunde liegende Aufgabe wird weiterhin gelöst durch eine Ultraschall-Schweissanordnung zum Ultraschall-Schweissen von Schweissgut, mit mindestens einem Ultraschallgeber entsprechend der obigen Beschreibung. Die Ultraschall-Schweissanordnung umfasst eine Vorrichtung zum Bewegen des mindestens einen Ultraschallgebers, mit welcher der Ultraschallgeber derart bewegt wird, dass eine für die Kühlung ausreichende Strömung und/oder Verwirbelung der Kühlflüssigkeit und ein Wärmeabgabe an das Gehäuse erfolgt. Bei der Bewegung werden Inhomogenitäten in der Temperaturverteilung der Kühlflüssigkeit in dem Gehäuse des Ultraschallgebers durch Verwirbelung und Umwälzung der Kühlflüssigkeit ausgeglichen und Wärme auf das Gehäuse übertragen.

Die Bewegung des Ultraschallgebers in der Ultraschall-Schweissanordnung hat zwei Effekte, zum einen kann der Ultraschallgeber zu oder mit dem Schweissgut geführt werden, zum anderen wird die Kühlflüssigkeit verwirbelt und umgewälzt, sodass ein Temperatur- und Wärmeausgleich stattfinden kann.

Eine Strömung und/oder Verwirbelung der Kühlflüssigkeit kann zum Beispiel erzielt werden, wenn der Ultraschallgeber um eine Achse drehbar ist, der Ultraschallgeber und die Kühlflüssigkeit in einer Rotation versetzt wird. Eine Platz sparende Bewegung erfolgt, wenn die Drehung um eine eigene Achse erfolgt, die Drehachse also innerhalb des Ultraschallgebers verläuft. Vorteilhaft ist auch, wenn die Drehachse mit der Vertikale einen Winkel bildet. In letztgenanntem Fall gibt es eine Bewegungskomponente entgegen der Schwerkraft, was die Durchmischung bei Temperatur-Inhomogenitäten und damit einhergehenden Dichteinhomogenitäten begünstigt.

In einem automatisierten Ablauf ist der mindestens eine Ultraschallgeber auf einer geschlossenen Bahn bewegbar, das heisst, er erreicht nach einer gewissen Bewegungsstrecke wieder seine Ausgangsposition. Vorteilhafterweise erfolgt auf dieser Bahn mindestens eine komplette Drehung, bei der sich der mindestens eine Ultraschallgeber mindestens einmal um sich selbst dreht.

In einer vorteilhaften Ausführungsform der Erfindung ist der Ultraschallgeber derart angeordnet, dass er unter Bewegung zum Ultraschall-Schweissen einsetzbar ist. Dazu bleiben die elektrischen Verbindungen auch während der Bewegung bestehen. Die Verwirbelung und/oder Strömung der Kühlflüssigkeit und der Wärmeaustausch können somit während des Schweissbetriebes erfolgen, also gleichzeitig mit dem Entstehen der Abwärme.

Gemäss einer vorteilhaften Ausführungsform ist der mindestens eine Ultraschallgeber parallel zum Schweissgut bewegbar. Das Schweissgut wird typischerweise über eine Vorschubeinrichtung, zum Beispiel auf einem Fliessband angeordnet oder als Meterware über eine Produktionsstrecke geführt, zu der Ultraschall-Schweissanordnung transportiert. Der Ultraschallgeber kann entlang eines Teils der Vorschubstrecke geführt werden und dabei in Schweissposition gebracht werden. Bei der Bewegung entlang der Vorschubstrecke bleibt die Kühlflüssigkeit nicht in Ruhe, sodass der Temperatur- und Wärmeausgleich erfolgen kann. Eine gute Strömung und/oder Verwirbelung entsteht, wenn der Teil der Vorschubstrecke in vertikaler Richtung verläuft. Die Konvektion in der Kühlflüssigkeit aufgrund der Schwerkraft wird damit verstärkt.

Der automatisierte Ablauf kann optimiert werden, wenn die Ultraschall-Schweissanordnung mindestens einen Amboss aufweist, der parallel zu dem mindestens einen Ultraschallgeber bewegbar ist, sodass der mindestens eine Ultraschallgeber synchron mit einem vorgeschobenen Schweissgut bewegbar und gleichzeitig einsetzbar ist.

Der Vorschub des Schweissguts muss für die Dauer des Schweissvorgangs nicht unterbrochen werden und eine Bewegung des Ultraschallgebers und damit der Kühlflüssigkeit erfolgt während des Betriebes gleichzeitig mit der Entstehung der Wärme.

Die Erfindung erfasst auch ein Verfahren zum Betreiben eines wenigstens einen von Kühlflüssigkeit umgebenen elektro-mechanischen Wandler enthaltenden Ultraschallgebers, wobei der Ultraschallgeber zur Erzeugung einer Verwirbelung und/oder Strömung der Kühlflüssigkeit bewegt wird. Das Verfahren läuft vorteilhaft mit einem wie oben beschriebenen Ultraschallgeber und/oder in einer wie oben beschriebenen Ultraschallanordnung ab.

In einer vorteilhaften Ausführung des Verfahrens wird zunächst Kühlflüssigkeit in ein Gehäuse des Ultraschallgebers geleitet und anschliessend wird das Gehäuse flüssigkeitsdicht verschlossen.

In einer weitergehenden Ausführung des Verfahrens wird der Ultraschallgeber gleichzeitig bewegt und zum Schweissen eingesetzt, Dabei besteht die Möglichkeit, dass der Ultraschallgeber synchron mit einem vorgeschobenen Schweissgut bewegt wird.

Die Erfindung wird nachfolgend in Ausführungsbeispielen anhand der zugehörigen Zeichnungen erläutert.

Es zeigen
- Figur 1: eine perspektivische Ansicht eines Ultraschallgebers;
- Figur 2: eine Darstellung eines Ultraschallgebers im Schnitt;
- Figur 3: eine schematische Darstellung eines ersten Beispiels für eine Ultraschallanordnung in perspektivischer Ansicht;
- Figur 4: eine schematische Darstellung eines zweiten Beispiels für eine Ultraschallanordnung in Draufsicht;
- Figur 5: eine schematische Darstellung eines dritten Beispiels für eine Ultraschallanordnung in seitlicher Ansicht;
- Figur 6: eine schematische Darstellung eines vierten Beispiels für eine Ultraschallanordnung in perspektivischer Ansicht.

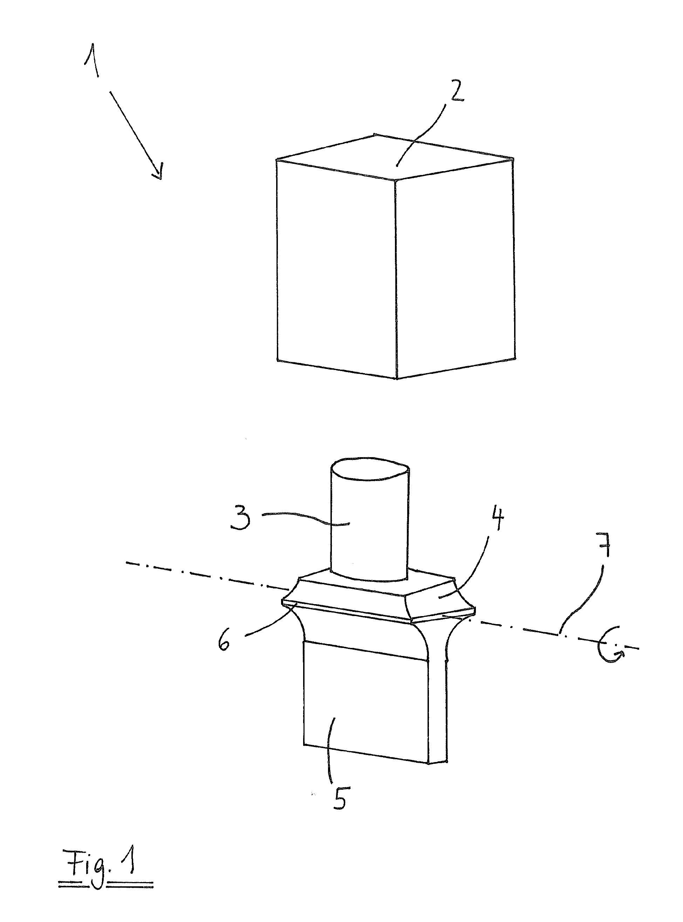

Figur 1 zeigt eine perspektivische Ansicht eines Ultraschallgebers 1 mit noch nicht verschlossenem Gehäuse 2. Der Ultraschallgeber umfasst einen oder mehrere elektro-mechanische Wandler 3, die an einen Konverterkörper 4, typischerweise aus Titan gefertigt, gekoppelt sind. Die in dem Ultraschallgeber 1 erzeugte Ultraschallenergie wird über eine Sonotrode 5 an ein in der Figur nicht gezeigtes Schweissgut abgegeben. Erfindungsgemäss wird das Gehäuse 2 über den Konverterkörper 4 und die drei elektro-mechanische Wandler 3 gestülpt und flüssigkeitsdicht mit dem Sockel 6 des Konverterkörpers 4 verbunden. Im Inneren des Gehäuses befindet sich dann ein hermetisch abgeschlossenes Volumen, das mit in der Figur nicht gezeigter Kühlflüssigkeit gefüllt ist.

Zur Umwälzung der Kühlflüssigkeit kann der Ultraschallgeber 1 beispielsweise um eine Achse 7, die durch den Ultraschallgeber 1 verläuft, gedreht werden.

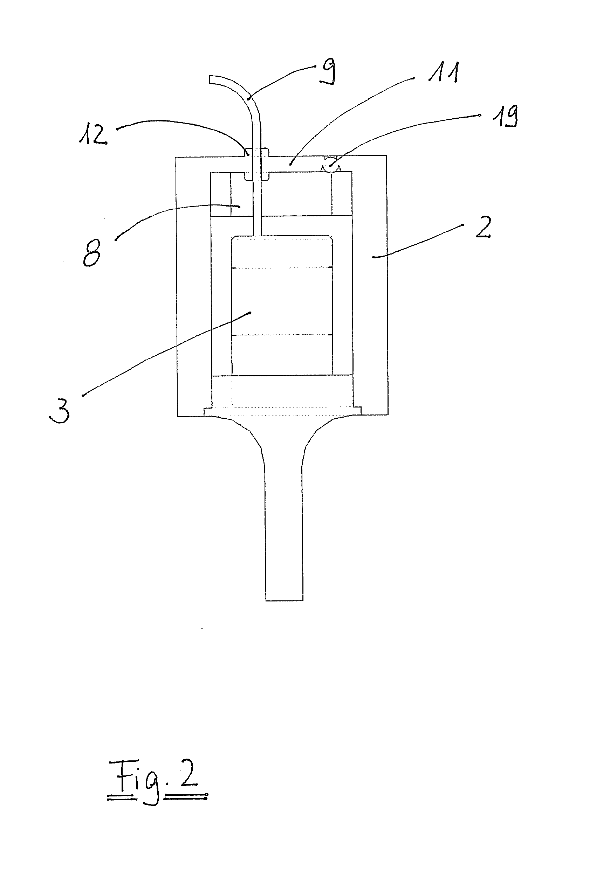

Figur 2 zeigt eine Schnittdarstellung eines Ultraschallgebers 1 mit aufgesetztem und hermetisch verschlossenem Gehäuse 2. Die Kühlflüssigkeit 8, die sich im Inneren des Gehäuses 2 befindet, umgibt den oder die elektro-mechanischen Wandler 3. Beim Betrieb des Ultraschallgebers 1 erwärmt sich die Kühlflüssigkeit 8 in der unmittelbaren Umgebung des oder der elektro-mechanischen Wandler 3. Wird die Kühlflüssigkeit 8 durch eine Bewegung des Ultraschallgebers 1 verwirbelt oder umgewälzt, verteilen sich die Inhomogenitäten in der Temperaturverteilung, die Wärme kann an das Gehäuse 2 abgegeben werden, welches die Wärme dann an die Umgebung abgibt.

Elektrische Zuleitungen 9 sind in dem Bereich 10, wo sie in das Gehäuse 2 eintreten, mit der Gehäusewand 11 in einer Glasperle 12 vergossen.

Durch die Bewegung der Kühlflüssigkeit 8, die für einen den schellen Wärmetransport sorgt, kann die Temperatur in der Kühlflüssigkeit 8 unter 120°C, insbesondere unter 100°C gehalten werden. Somit können sich auch der oder die elektro-mechanischen Wandler nicht stärker erwärmen.

Als Kühlflüssigkeit 8 wird beispielsweise Paraffin oder Transformatoröl verwendet.

Die Kühlflüssigkeit 8 wird durch ein in der Gehäusewand 11 angeordnetes Einwegventil 19 eingeleitet. Das Einwegventil 19, beispielsweise ein Kugelventil, wird unter Druck geöffnet, sodass die Kühlflüssigkeit 8 in das Gehäuse 2 gelangen kann. Sobald der Druck nachlässt, schliesst das Einwegventil 19 und das Gehäuse 2 ist flüssigkeitsdicht abgeschlossen.

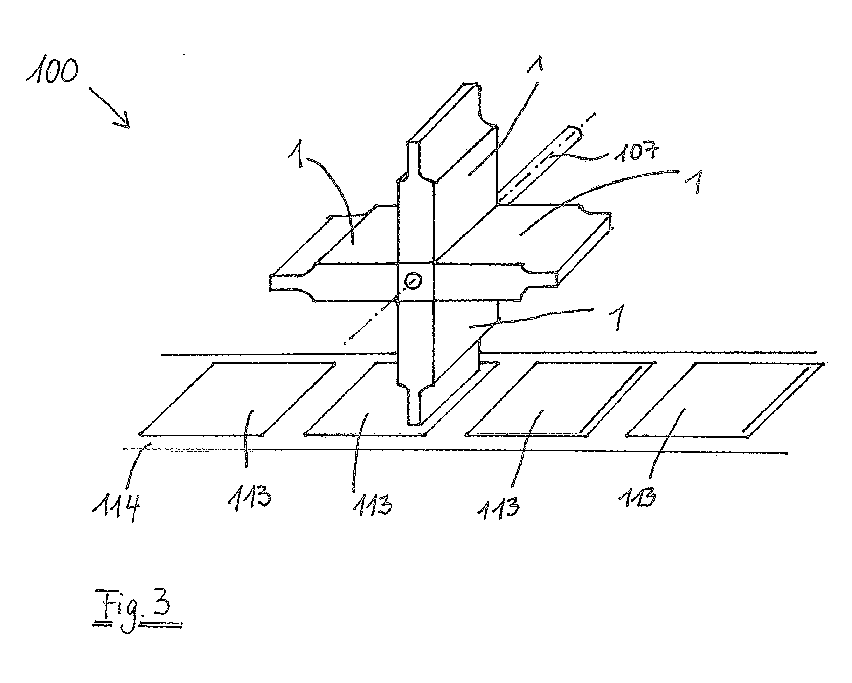

Figur 3 zeigt eine schematische Darstellung eines ersten Beispiels für eine Ultraschallanordnung 100 in perspektivischer Ansicht. Die Ultraschallanordnung 100 umfasst vier Ultraschallgeber 1, die um eine Achse 107 herum angeordnet sind. Eine nicht in der Figur gezeigte Drehvorrichtung dreht die Ultraschallgeber 1 zwischen den Schweissvorgängen um 90 Grad, sodass immer ein Ultraschallgeber 1 einsatzbereit ist. Gleichzeitig wird Schweissgut 113 auf einem Fliessband 114 liegend an der Ultraschallanordnung 100 vorbeigeführt. Während der Drehung der Ultraschallgeber 1 erfolgt ein Vorschub des Fliessbandes 114. Je nach Kühlflüssigkeit kann ein Ultraschallgeber 1 auch mehrmals hintereinander zum Schweissen eingesetzt werden. Kommt der Ultraschallgeber 1 wieder in Einsatzposition, so hat er seit dem letzten Schweisseinsatz eine vollständige Drehung um sich selbst durchgeführt, dabei ist die Kühlflüssigkeit im Gehäuse des Ultraschallgebers ausreichend verwirbelt und/oder umgewälzt worden, die elektro-mechanischen Wandler sind gekühlt und der Ultraschallgeber 1 arbeitet mit vollständiger Effizienz.

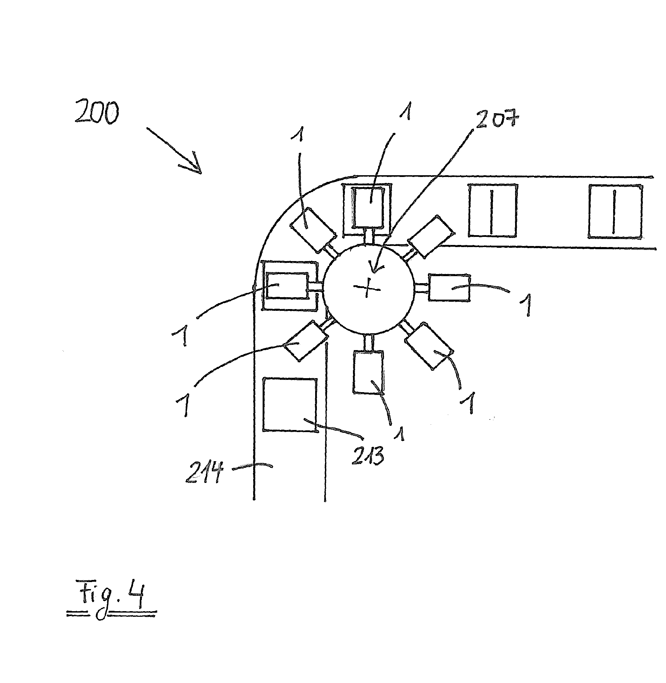

Figur 4 zeigt eine schematische Darstellung eines zweiten Beispiels für eine Ultraschallanordnung 200 in Draufsicht. Die Ultraschallanordnung 200 umfasst hier acht Ultraschallgeber 1, die ebenfalls um eine Achse 207, hier senkrecht zur Bildebene, herum angeordnet sind. Das Schweissgut 213 wird ebenfalls auf einem Fliessband 214 an die Ultraschallanordnung 200 herangeführt. In diesem Beispiel können mehrere Ultraschallgeber 1 gleichzeitig eingesetzt werden. Die Ultraschallgeber 1 werden ausserdem parallel zu dem Schweissgut 213 bewegt, so dass prinzipiell der Schweissvorgang während der Bewegung des Schweissguts 213 erfolgen kann.

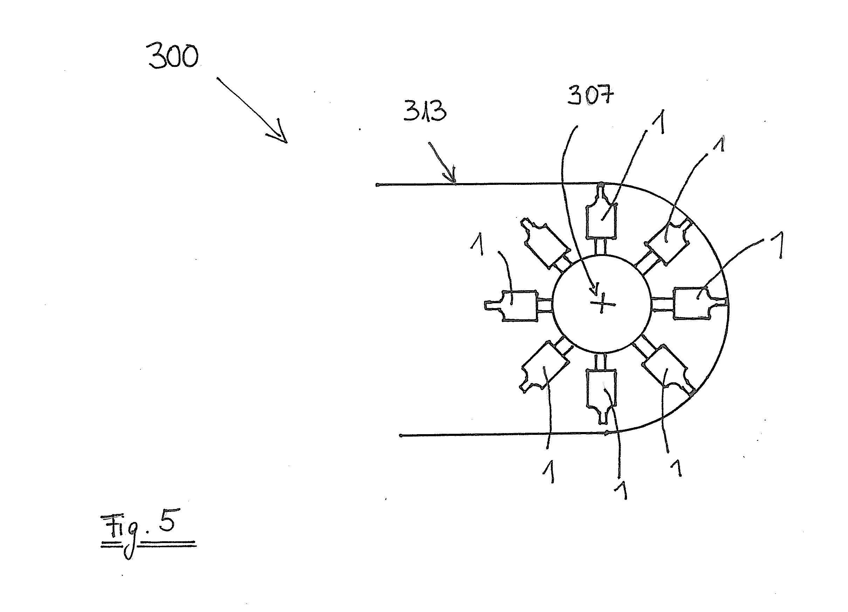

In Figur 5 ist eine schematische Darstellung eines dritten Beispiels für eine Ultraschallanordnung 300 in seitlicher Ansicht gezeigt. Wiederum sind acht Ultraschallgeber 1 um eine Achse 307, ebenfalls senkrecht zur Bildebene, angeordnet. In diesem Fall wird das Schweissgut 313 allerdings als Meterware an der Ultraschallanordnung 300 vorbeigeführt, sodass die Schweissrichtung in der Bildebene und senkrecht zur Drehachse 307 liegt. Auch in diesem Fall können die Ultraschallgeber 1 parallel zu Schweissgut 313 bewegt werden, mehrere Ultraschallgeber 1 gleichzeitig und prinzipiell während der Bewegung betrieben werden.

Die Rotation um eine horizontale Achse 307 stellt sicher, dass die Kühlflüssigkeit genügend verwirbelt und/oder umgewälzt wird, um den Wärmeaustausch zu ermöglichen.

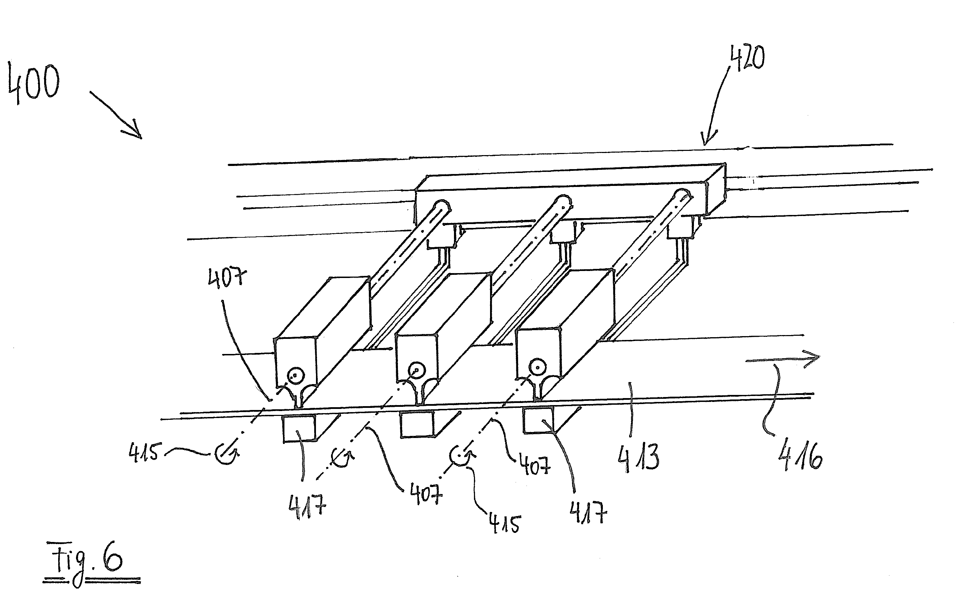

Figur 6 zeigt eine schematische Darstellung eines vierten Beispiels für eine Ultraschallanordnung 400 in perspektivischer Ansicht. In diesem Beispiel sind drei Ultraschallgeber 1 jeweils einzeln um Achsen 407 drehbar, die jeweils durch den Ultraschallgeber 1 verlaufen. Die Drehung erfolgt jeweils in derselben Drehrichtung 415.

Ausserdem sind alle Ultraschallgeber 1 mit einer Vorrichtung 420 zum Bewegen der Ultraschallgeber 1 verbunden, die nicht nur für die Rotation der Ultraschallgeber 1 sorgt, sondern auch für eine Bewegung entlang der Vorschubrichtung 416 des Schweissguts 413 und für eine Positionierung von Ambossen 417.

Ein Arbeitsgang kann folgende Schritte aufweisen. Das Schweissgut 413 wird zur Ultraschallanordnung 400 geschoben. Die Ultraschallgeber 1 und die jeweiligen Ambosse 417 werden in Kontakt mit dem Schweissgut 413 gebracht. Ultraschallgeber 1, Schweissgut 413 und Ambosse 417 werden synchron zueinander in Vorschubrichtung 416 weiterbewegt, währenddessen findet der Schweissvorgang statt.

Sobald der Schweissvorgang beendet ist, lösen sich Ultraschallgeber 1 und Ambosse 417 vom Schweissgut 413, die Vorrichtung 420 zum Bewegen bringt die Ultraschallgeber 1 und die Ambosse 417 wieder in Ausgangsposition, wobei die Ultraschallgeber 1 einmal um ihre Achsen 407 gedreht werden. Während des Rücktransports wird das Schweissgut 416 weiter geschoben, sodass sich ein weiterer Arbeitsgang unmittelbar anschliessen kann.

## Patentansprüche

1. Ultraschallgeber, insbesondere zum Ultraschall-Schweissen mit mindestens einem elektro-mechanischen Wandler, insbesondere einem Piezopaket,
wobei der mindestens eine elektro-mechanische Wandler mindestens teilweise von Kühlflüssigkeit umgeben ist,
sich die Kühlflüssigkeit (8) in einem Gehäuse (2) befindet, welches den mindestens einen elektro-mechanischen Wandler (3) zumindest teilweise umgibt und über dessen Aussenwand (11) Wärme von der Kühlflüssigkeit (8) an die Umgebung ableitbar ist,
der mindestens eine elektro-mechanische Wandler (3) so in dem Gehäuse (2) angeordnet ist, dass Kühlflüssigkeit (8) zwischen dem mindestens einen elektro-mechanischen Wandler (3) und dem Gehäuse (2) strömen kann
und wobei die Kühlflüssigkeitsströmung so ausgelegt ist, dass durch Bewegung des Ultraschallgebers (1) eine für die Kühlung ausreichende Strömung und/oder Verwirbelung der Kühlflüssigkeit (8) und ein Wärmeabgabe an das Gehäuse (2) erfolgt.

2. Ultraschallgeber gemäss Anspruch 1, **dadurch gekennzeichnet, dass**
die Strömung und/oder Verwirbelung der Kühlflüssigkeit auf das Gehäuse beschränkt ist.

3. Ultraschallgeber gemäss mindestens einem der vorhergehenden Ansprüche, **dadurch gekennzeichnet, dass**
die Kühlflüssigkeit (8) ein elektrischer Isolator ist

4. Ultraschallgeber gemäss mindestens einem der vorhergehenden Ansprüche, **dadurch gekennzeichnet, dass** die Kühlflüssigkeit (8) wenig oder gar nicht kavitierend ist, insbesondere ein Öl oder ein Paraffin ist.

5. Ultraschallgeber gemäss mindestens einem der vorhergehenden Ansprüche, **dadurch gekennzeichnet, dass** die Kühlflüssigkeit (8) unter einem Druck steht, der grösser als der Umgebungsdruck des Gehäuses (2) ist, insbesondere, wenn als Kühlflüssigkeit (8) eine bei Umgebungsdruck kavitierende Flüssigkeit vorgesehen ist.

6. Ultraschallgeber gemäss mindestens einem der vorhergehenden Ansprüche, **dadurch gekennzeichnet, dass** elektrische Zuleitungen (9) in einer Glasperle (12) vergossen sind und die Glasperle (11) in dem Bereich (10), wo die elektrischen Zuleitungen (9) in das Gehäuse (2) treten, mit der Gehäusewand (11) in dichtendem Kontakt steht.

7. Ultraschall-Schweissanordnung zum Ultraschall-Schweissen vor Schweissgut,
mit mindestens einem Ultraschallgeber (1) gemäss mindestens einem der vorhergehenden Ansprüche und
einer Vorrichtung zum Bewegen (420) des mindestens einen Ultraschallgebers (1), **dadurch gekennzeichnet, dass** der Ultraschallgeber (1) derart bewegbar ist, dass eine für die Kühlung ausreichende Strömung und/oder Verwirbelung der Kühlflüssigkeit (8) und ein Wärmeabgabe an das Gehäuse (2) erfolgt.

8. Ultraschall-Schweissanordnung gemäss Anspruch 7, **dadurch gekennzeichnet, dass** der mindestens einen Ultraschallgeber (1) um eine Achse (7; 107; 207; 307; 407) drehbar ist, insbesondere um eine eigene Achse (7; 107; 207; 307; 407) und/oder eine Achse (7; 107; 207; 307; 407), die mit der Vertikale einen Winkel einschliesst.

9. Ultraschall-Schweissanordnung gemäss mindestens einem der Ansprüche 7 oder 8, **dadurch gekennzeichnet, dass** der Ultraschallgeber (1) derart angeordnet ist, dass er unter Bewegung zum Ultraschall-Schweissen einsetzbar ist.

10. Ultraschall-Schweissanordnung gemäss Anspruch 7 bis 9, **dadurch gekennzeichnet, dass**
der mindestens eine Ultraschallgeber (1) parallel zu einer Vorschubstrecke des Schweissguts (113; 213; 313; 413) bewegbar angeordnet ist.

11. Ultraschall-Schweissanordnung gemäss Anspruch 10, **dadurch gekennzeichnet, dass**
die Ultraschall-Schweissanordnung mindestens einen Amboss (417) aufweist, der parallel zu dem mindestens einen Ultraschallgeber (1) bewegbar angeordnet ist, sodass der mindestens eine Ultraschallgeber (1) synchron mit einem vorgeschobenen Schweissgut (113; 213; 313; 413) bewegbar und gleichzeitig einsetzbar ist.

12. Verfahren zum Betreiben eines wenigstens einen von Kühlflüssigkeit umgebenen elektro-mechanischen Wandler enthaltenden Ultraschallgebers, insbesondere gemäss mindestens einem der Ansprüche 1-6, insbesondere in einer Ultraschall-Schweissanordnung gemäss mindestens einem der Ansprüche 7-11, **dadurch gekennzeichnet, dass**
der Ultraschallgeber (1) zur Erzeugung einer Verwirbelung und/oder Strömung der Kühlflüssigkeit (8) bewegt wird.

13. Verfahren gemäss Anspruch 12, **dadurch gekennzeichnet, dass** zunächst Kühlflüssigkeit (8) in das Gehäuse (2) des Ultraschallgebers (1) geleitet wird und das Gehäuse (2) flüssigkeitsdicht verschlossen wird.

14. Verfahren gemäss mindestens einem der Ansprüche 12 oder 13, **dadurch gekennzeichnet, dass** der Ultraschallgeber (1) gleichzeitig bewegt und zum Schweissen eingesetzt wird.

15. Verfahren gemäss mindestens Anspruch 14, **dadurch gekennzeichnet, dass** der Ultraschallgeber (1) synchron mit einem vorgeschobenen Schweissgut (113; 213; 313; 413) bewegt wird.
